# EUROPEAN PATENT APPLICATION

(11) **EP 1 422 084 A2**
(43) Date of publication of application: **26.05.2004**
(21) Application number: 03025715.8
(22) Date of filing: 07.11.2003
(51) Int. Cl.: B60H 1/32

(54) **Power-saving control device for air-conditioning system**

(30) Priority: 25.11.2002 JP 2002340897
(71) Applicant: Zexel Valeo Climate Control Corporation, Saitama (JP)
(72) Inventor: Kawamura, Yuji c/o Zexel Valeo Climate Control C., Osato-gun, Saitama (JP); Ebihara, Makoto c/o Zexel Valeo Climate Control, Osato-gun, saitama (JP); Irie, Kazuhiro c/o Zexel Valeo Climate Control, Osato-gun, Saitama (JP)
(74) Representative: Degwert, Hartmut, Dipl.-Phys.

(57) **Abstract**

In a power-saving control device for an air-conditioning system according to the present invention comprising an air-conditioning duct having an air flow passage formed therein, a variable-capacity compressor that allows the output capacity with which a compressed coolant is output to be varied and an evaporator that is disposed inside the air flow passage at the air-conditioning duct, receives the coolant output from the variable-capacity compressor via a pressure-reducing device and performs heat exchange between the low-temperature, low-pressure coolant supplied thereto and air flowing through the air flow passage, and adopting a structure enabling power-saving control through control of the output capacity of the variable-capacity compressor, a dew-point temperature is calculated based upon a factor correlated to generation of odor from the evaporator, a critical evaporating temperature to constitute a threshold of the odor generation is determined based upon the dew-point temperature and the evaporating temperature is adjusted to a higher level or a lower level relative to the critical evaporating temperature. In the air conditioning system utilizing a variable-capacity compressor, power-saving control on the variable-capacity compressor is achieved while preventing or reducing the extent of odor generation from the endoergic heat exchanger provided within the air-conditioning duct.

## Description

The present invention relates to a power-saving control device to be used in an air-conditioning system for a vehicle or the like which utilizes a variable-capacity compressor to enable power-saving control to be implemented on the variable-capacity compressor while preventing the generation of offensive odor from an evaporator disposed inside an air-conditioning case.

While power can be effectively saved in an air-conditioning system that employs a variable-capacity compressor by raising the evaporating temperature in the middle heat load range to reduce the compression ratio of the compressor, the problem of odor generated from the evaporator during such an operation must first be addressed.

The odor, which is initially caused by growth of bacteria, cigarette smoke, fermenting mildew and the like inside the air-conditioning case, is blown out as the air-conditioning system is activated and, at the same time, molecules of the odor are absorbed into water condensed at the surface of the evaporator. Since odor molecules tend to concentrate toward the air outlet of the evaporator, condensed water formed on the air outlet side is bound to absorb and hold molecules of strong odor.

Thus, while offensive odor does not develop as odor molecules are mostly absorbed in the condensation formed at the surface of the evaporator in an operating state in which the evaporating temperature is equal to or lower than the dew-point temperature of the air flowing into the evaporator, it has been learned that odor develops through the following process in an air-conditioning system having a fixed-capacity compressor with a fixed output capacity in which control is implemented when the air temperature is low or during a high-speed operation to stop the compressor once the evaporating temperature is lowered to a point at which the evaporator becomes frozen.

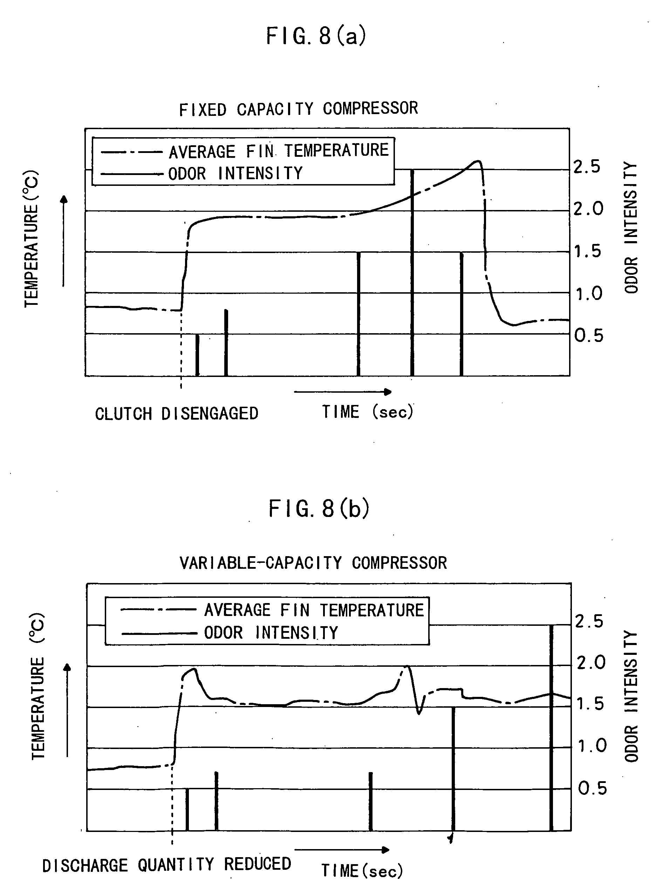

First, as the compressor stops, the temperature of the fins at the evaporator rises to a level equal to or higher than the dew-point temperature of the air as shown in FIG. 8(a), and, as a result, condensation no longer occurs at the surfaces of the fins and the condensed water at the fin surfaces starts to evaporate into the flowing air. As this happens, odor molecules present in the condensed water are released, which starts to develop a weak odor.

Subsequently, as this state is sustained for awhile and the condensed water on the air outlet side of the evaporator starts to evaporate, the intensity of the odor increases and, at the same time, the moisture at the surfaces of the fins dissipates. As a result, the fin temperature starts to rise rapidly, to a level close to the air temperature at the intake. Then, as all the fins become completely dry, no more odor molecules are evaporated and thus the odor itself becomes weaker.

For this reason, while the development of an intense odor cannot be avoided unless the fixed-capacity compressor having been stopped is restarted at an early stage, it is sometimes necessary to keep the compressor in a stopped state over an extended period of time in order to prevent the evaporator from freezing and, in such a case, the development of an intense odor cannot easily be prevented. It is to be noted that control is implemented to prevent odor from air-conditioning systems in the known art by adopting technologies disclosed in, for instance, Patent Literature 1 and Patent Literature 2.
(Patent Literature 1) Japanese Unexamined Patent Publication No. S 63-40006
(Patent Literature 2) Japanese Patent Gazette No. 3264062 (column 0003)

In contrast, in an 'air-conditioning system having a variable-capacity compressor, which basically does not require control for stopping the compressor, control for reducing the compression ratio by raising the evaporating temperature within a range that still provides a comfortably air-conditioned environment. Namely, when the air temperature at the intake is low or the air quantity is low or during high-speed operation, control for reducing the output capacity is implemented so as to prevent the evaporating temperature from becoming too low or to save the power.

For instance, when the air supply quantity is reduced, the heat exchanged in the evaporator is reduced, lowering the evaporating temperature, and accordingly, the compressor is controlled to raise the evaporating temperature by reducing the output volume as a countermeasure (see FIG. 8(b)).

During this process, the condensed water does not evaporate as long as the raised evaporating temperature is still equal to or lower than the dew-point temperature of the intake air and no odor is generated as time passes. However, if the evaporating temperature becomes higher than the dew-point temperature by 1 to 2° and the saturated aqueous vapor pressure exceeds the aqueous vapor partial pressure on the air supply side, the condensed water at the surfaces of the fins of the evaporator starts to evaporate and thus, a weak odor starts to develop. Since a coolant is continuously supplied in the variable-capacitor compressor, the temperature at the evaporator does not rise as much as the temperature rises when the clutch of a fixed-capacity compressor is disengaged and for this reason, the condensed water does not evaporate as much either. Thus, the intensity of the odor generated tends to be lower than in an air-conditioning system employing a fixed-capacity compressor. In addition, since the quantity of condensed water that evaporates is smaller, the fin surfaces become dry over a longer period of time, the air outlet side starts to dry over a longer period of time than in an air-conditioning system employing the fixed-capacity compressor and intense odor starts to develop gradually as the air outlet side starts to dry.

As described above, when a variable-capacity compressor is employed, the generation of strong odor can be delayed by raising the evaporating temperature and thus, the power can be saved effectively in the compressor. However, there is still a problem in that the odor generation caused by the evaporating condensed water cannot be completely prevented simply by increasing the evaporating temperature.

Accordingly, an object of the present invention is to provide a power-saving control device in an air-conditioning system employing a variable-capacity compressor, which enables power-saving control to be implemented on the variable-capacity compressor while preventing or reducing the extent of odor generated from an evaporator disposed inside an air-conditioning case.

In order to achieve the object described above, the power-saving control device for an air-conditioning system according to the present invention comprising an air-conditioning case having an air flow passage formed therein, a variable-capacity compressor that allows an output capacity with which compressed coolant is output to be varied and an evaporator that is disposed inside the air flow passage at the air-conditioning case and executes heat exchange between the coolant output from the variable-capacity compressor and supplied thereto via a pressure-reducing device and air flowing through the air flow passage and adopting a structure that enables power-saving control through control of the output capacity of the variable-capacity compressor, further includes a means for correlational factor acquisition that obtains a factor correlated to generation of odor from the evaporator, a means for dew-point temperature calculation that obtains through an arithmetic calculation a dew-point temperature based upon the factor obtained by the means for correlational factor acquisition and a means for control that determines a critical evaporating temperature to constitute a threshold value of odor generation based upon the dew-point temperature calculated by the means for dew-point temperature calculation and alternately switches to an operation during which an evaporating temperature is sustained at a level higher than the critical evaporating temperature over a predetermined length of time and an operation during which the evaporating temperature is sustained at a level lower than the critical evaporating temperature over a predetermined length of time through the control of the output capacity of the variable-capacity compressor.

Since a factor correlated to the generation of odor that may develop from the evaporator is obtained by the means for correlational factor acquisition, the dew-point temperature at the evaporator is calculated based upon the factor by the means for dew-point temperature calculation and the evaporating temperature is switched to the higher level or the lower level relative to the calculated dew-point temperature by the means for control, condensed water is formed at the surface of the evaporator to trap odor molecules by setting the evaporating temperature lower than the critical evaporating temperature and the compression ratio of the compressor is reduced by raising the evaporating temperature when condensed water has formed to a certain extent. Then, after sustaining this state over a predetermined length of time, the evaporating temperature is lowered again to promote formation of condensed water to prevent or reduce the extent of odor generation. As a result, the occurrence of odor attributable to the increase in the evaporating temperature can be avoided or reduced and, at the same time, power-saving can be achieved in the compressor.

In addition, in order to achieve the object described above, the power-saving control device for an air-conditioning system according to the present invention comprising an air-conditioning case having an air flow passage formed therein, a variable-capacity compressor that allows an output capacity with which a compressed coolant is output to be varied and an evaporator that is disposed inside the air flow passage at the air-conditioning case and executes heat exchange between the coolant output from the variable-capacity compressor and supplied thereto via a pressure-reducing device and air flowing through the air flow passage and adopting a structure that enables power-saving control through control of the output capacity of the variable-capacity compressor, may instead further include a means for correlational factor acquisition that obtains a factor correlated to generation of odor from the evaporator, a means for dew-point temperature calculation that obtains through an arithmetic calculation a dew-point temperature based upon the factor obtained by the means for correlational factor acquisition and a means for control that enables continuous execution of an operation during which the evaporating temperature is kept at a level close to the dew-point temperature calculated by the means for dew-point temperature calculation and, at the same time, lower than the dew-point temperature through the control of the output capacity of the variable-capacity compressor.

This structure, having the means for correlational factor acquisition that obtains a factor correlated to odor generation that may occur at the evaporator, the means for dew-point temperature calculation that calculates the dew-point temperature at the evaporator based upon the factor and the means for control that sustains the evaporating temperature at a value slightly lower than the calculated dew-point temperature, makes it possible to avoid an excessive consumption of power at the compressor and also makes it possible to avoid or reduce the extent of odor generation by preventing the evaporator surface from becoming dry.

The means for correlational factor acquisition employed in the structure described above may be sensors that measure a dry-bulb temperature and the relative humidity of the air flowing into the evaporator to enable the means for dew-point temperature calculation to calculate the dew-point temperature based upon the dry-bulb temperature and the relative humidity.

Alternatively, in order to achieve the object described above, the power-saving control device for an air-conditioning system according to the present invention, comprising
an air-conditioning case having an air flow passage formed therein, a variable-capacity compressor that allows an output capacity with which a compressed coolant is output to be varied and an evaporator that is disposed inside the air flow passage at the air-conditioning case and executes heat exchange between the coolant output from the variable-capacity compressor and supplied thereto via a pressure-reducing device and air flowing through the air flow passage and adopting a structure that enables power-saving control through control of the output capacity of the variable-capacity compressor, may further include a means for correlational factor acquisition that obtains a factor correlated to generation of odor from the evaporator and a means for evaporating temperature control that sets an evaporating temperature to a lower level over a predetermined length of time by increasing the output capacity of the variable-capacity compressor as soon as the factor obtained by the means for correlational factor acquisition exceeds a predetermined threshold value after the variable-capacity compressor starts an operation for reducing the output capacity.

In this structure, the value indicated by the factor which is correlated to the generation of odor from the evaporator exceeds a predetermined threshold value as the evaporating temperature rises, the surface of the evaporator starts to dry and an odor starts to develop after the operation for reducing the output capacity of the variable-capacity compressor starts, and in response, the means for evaporating temperature control lowers the evaporating temperature over the predetermined length of time by increasing the output capacity of the variable-capacity compressor. Thus, the power consumed in the compressor can be minimized and, at the same time, the extent of odor generation can be kept down.

In this structure, the means for correlational factor acquisition may be constituted of a humidity detection sensor that detects the humidity of the air having passed through the evaporator and the means for evaporating temperature control may lower the evaporating temperature over the predetermined length of time by increasing the output capacity of the variable-capacity compressor as the humidity detected with the humidity detection sensor becomes lower than a specific threshold value after the operation for reducing the output capacity of the variable-capacity compressor starts.

Alternatively, the means for correlational factor acquisition may be constituted of an electric resistance sensor that is inserted at a fin surface at the evaporator to detect an electric resistance so as to enable the means for evaporating temperature control to lower the evaporating temperature over the predetermined length of time by increasing the output capacity of the variable-capacity compressor as the resistance detected with the electric resistance sensor rises beyond a specific threshold value after the operation for reducing the output capacity of the variable-capacity compressor starts, or the means for correlational factor acquisition may be constituted of an electrostatic capacity sensor that is inserted at a fin surface at the evaporator to detect an electrostatic capacity so as to enable the means for evaporating temperature control to lower the evaporating temperature over the predetermined length of time by increasing the output capacity of the variable-capacity compressor as the electrostatic capacity detected with the electrostatic capacity sensor increases beyond a predetermined threshold value after the operation for reducing the output capacity of the variable-capacity compressor starts.

As a further alternative, the means for correlational factor acquisition may be constituted of a thermal sensor that is inserted at a fin surface inside an air passage at the evaporator to detect a fin temperature so as to enable the means of evaporating temperature control to lower the evaporating temperature over the predetermined length of time by increasing the output capacity of the variable-capacity compressor as the fin temperature rises beyond a predetermined threshold value.

In addition, in order to achieve the object described above, the power saving control device for an air-conditioning system according to the present invention, comprising
an air-conditioning case having an air flow passage formed therein, a variable-capacity compressor that allows an output capacity with which a compressed coolant is output to be varied and an evaporator that is disposed inside the air flow passage at the air-conditioning case and executes heat exchange between the coolant output from the variable-capacity compressor and supplied thereto via a pressure-reducing device and air flowing through the air flow passage and adopting a structure that enables power-saving control through control of the output capacity of the variable-capacity compressor, may further include a means for correlational factor acquisition that obtains a factor correlated to generation of odor from the evaporator, and a means for control that determines typical characteristics unrelated to humidity based upon the factor obtained by the means for correlational factor acquisition and controls the output capacity of the variable-capacity compressor based upon the typical characteristics.

While stringent control for preventing odor generation cannot be achieved in this structure having the means for correlational factor acquisition that obtains a factor correlated to generation of odor from the evaporator and the means for control that determines typical characteristics unrelated to the humidity based upon the factor and controls the output capacity of the compressor based upon the typical characteristics thus determined, the power can be saved in the compressor and rough control for suppressing or reducing the extent of the odor generation can be achieved.

Further objects and advantages of the invention can be more fully understood from the following detailed description given in conjunction with the accompanying drawings. It shows:
- FIG. 1 schematically illustrating the structure adopted in an example of an air-conditioning system in which the power-saving control according to the present invention may be implemented;
- FIG. 2 presenting a flowchart of an example of the power-saving control operation executed in the control unit shown in FIG. 1;
- FIG. 3 presenting a characteristics diagram showing the change in the evaporating temperature achieved by implementing the control as shown in the flowchart in FIG. 2;
- FIG. 4 presenting a flowchart of another example of the power-saving control operation executed in the control unit in FIG. 1;
- FIG. 5 presenting a characteristics diagram showing the change in the evaporating temperature achieved by implementing the control as shown in the flowchart in FIG. 4;
- FIG. 6 presenting a flowchart of yet another example of the power-saving control operation executed in the control unit in FIG. 1;
- FIG. 7 presenting a flowchart of yet another example of the power-saving control operation executed in the control unit in FIG. 1; and
- FIG. 8(a) presenting a characteristics diagram illustrating the process of odor generation in an air-conditioning system employing a fixed-capacity compressor and
- FIG. 8(b) presenting a characteristics diagram illustrating the process of odor generation in an air-conditioning system employing a variable-capacity compressor.

The following is an explanation of preferred embodiments of the present invention, given in reference to the drawings.

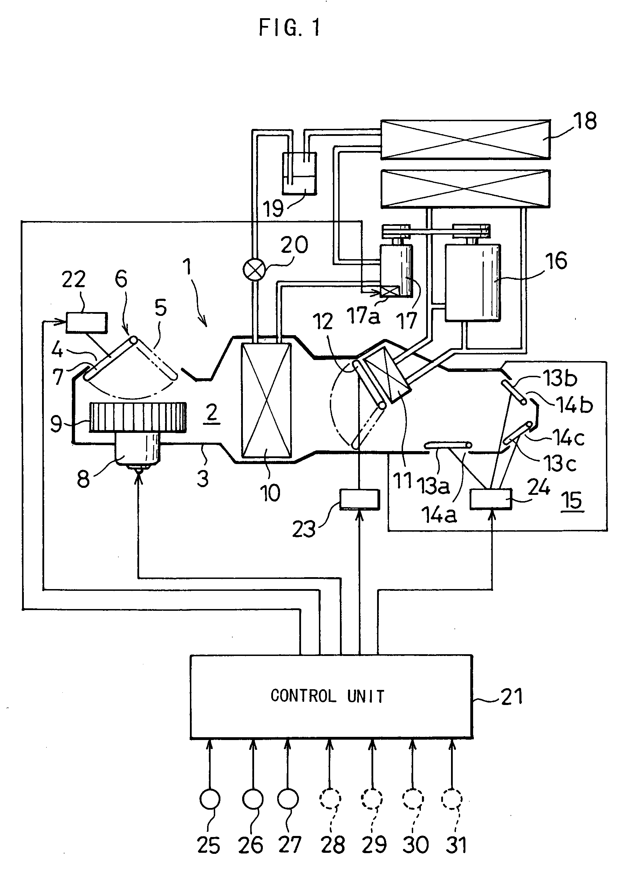

In FIG. 1 schematically showing the structure adopted in an air-conditioning unit 1 mounted at a vehicle, the air-conditioning unit 1 includes an intake switching device 6 having an external air intake 4 and an internal air intake 5 at the upstream-most side of an air-conditioning case 3 which has an air flow passage 2 formed therein. The ratio of external air taken in through the external air intake 4 and the internal air taken in through the internal air intake 5 is adjusted through an intake door 7. At the air-conditioning case 3, an air blower 9 that is rotated by a motor 8 is provided so as to face the external air intake 4 and the internal air intake 5 of the intake switching device 6, and the air taken in through the intakes as the air blower 9 rotates is force-fed to an evaporator 10 disposed on the downstream side.

On the downstream side relative to the evaporator 10, a heater core 11 which uses engine cooling water as a heat source is provided, and an air-mix door 12 is disposed in front of the heater core 11. After the air passes through the evaporator 10, the ratio of air to pass through the heater core 11 and air to bypass the heater core 11 is adjusted through the air-mix door 12.

Then, the air with the temperature thereof adjusted at the evaporator 10 and the heater core 11 is blown into a cabin 15 via outlet openings (a defrost outlet opening 14a, a vent outlet opening 14b and a foot outlet opening 14c) opened/closed with mode doors 13a, 13b and 13c provided on the downstream-most side of the air-conditioning case 3.

The evaporator 10, which is connected via piping with a compressor 17 that rotates as it receives motive power from an engine 16, a condenser 18 that condenses and liquefies a high-temperature, high pressure coolant having been compressed by the compressor 17, a receiver 19 that accumulates the coolant having been condensed and liquefied by the condenser 18, separates the coolant into a gas-phase coolant and a liquid-phase coolant and supplies the liquid-phase coolant alone to the downstream side and an expansion device 20 that obtains a low-temperature, low-pressure gas-liquid mixed coolant by reducing the pressure of the liquid-phase coolant supplied from the receiver 19 thereby constituting a freezing cycle, evaporates and vaporizes the low-temperature, low-pressure gas-liquid mixed coolant supplied from the expansion device 20 by exchanging the heat of the gas liquid mixed coolant with the heat of the air flowing inside the air flow passage 2. A high-pressure line is constituted with a coolant path extending from the outlet of the compressor 17 to the expansion device 20 via the condenser 18, whereas a low-pressure line is constituted with the coolant path extending from the expansion device 20 to the intake of the compressor 17 via the evaporator 10. The pressure at the low-pressure line is controlled by adjusting the output capacity of the compressor.

The compressor 17 utilized in this structure is a so-called external control type variable-capacity compressor that includes a control valve 17a for controlling the operation of a drive mechanism which varies the output quantity and changes the output quantity by controlling a control signal provided to the control valve 17a, and it is belt driven by an engine 1.

In addition, actuators 22 ∼ 24 , which respectively drive and control the intake door 7, the air-mix door 12 and the mode doors 13a ∼ 13c respectively and the motor 8 of the air blower 9 are controlled in conformance to control signals provided by a control unit 21. The control unit 21 adopts a structure in the known art, having a central processing unit (CPU), a read only memory (ROM), a random access memory (RAM), an input/output port and the like receives a signal provided by a dry-bulb thermal sensor 25 that detects the dry-bulb temperature of the air on the inflow side of the evaporator 10, a signal from a wet-bulb thermal sensor 26 that detects the wet-bulb temperature on the inflow side of the evaporator 10, a signal provided by a low-pressure detection sensor 27 that detects the pressure at the low-pressure line of the freezing cycle and the like, processes the various input signals in conformance to a specific program installed in the memory and controls the evaporating temperature and the like by controlling the output capacity of the compressor 17.

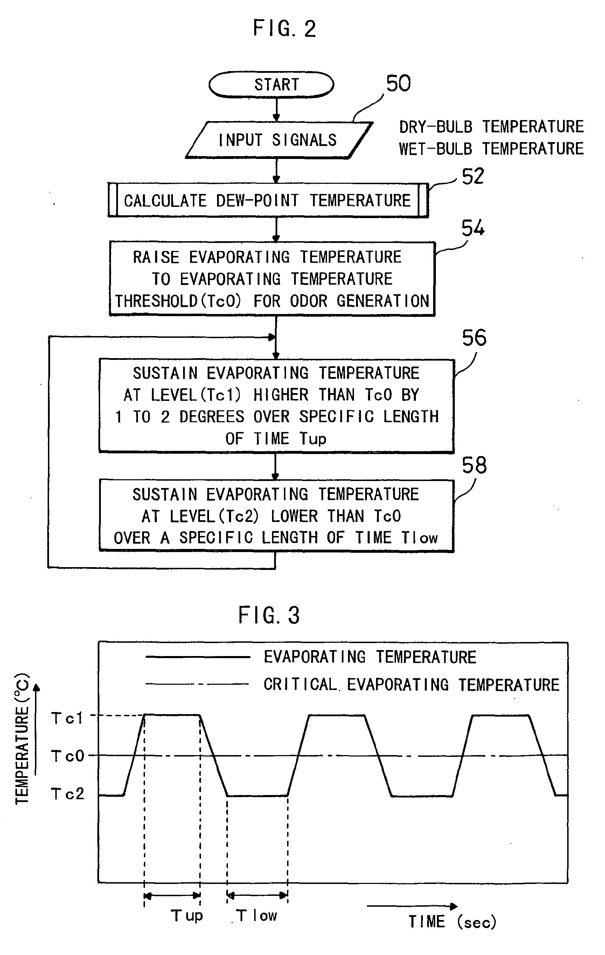

Now, an example of the control operation that is executed by the control unit 21 for the air-conditioning system is explained in reference to the flowchart presented in FIG. 2. FIG. 2 only shows the processing related to the evaporating temperature control to simplify the explanation, and other types of processing are not included in the chart.

After the air-conditioning system is started up, the control unit 21 enters this control routine via a series of initial processing including initial setting. In the control routine, the dry-bulb temperature detected with the dry-bulb thermal sensor 25 and the web valve temperature detected with the wet-bulb thermal sensor 26 are input (step 50), and the dew-point temperature is calculated based upon these temperatures by adopting an arithmetic operation method in the known art (step 52).

Then, based upon the dew-point temperature calculated in step 52, the actual evaporating temperature is raised to a level constituting a threshold (hereafter referred to as a critical evaporating temperature: Tc0) at which odor is generated (step 54). Subsequently, the evaporating temperature is raised to a level (Tc1) which is higher than Tc0 by 1 to 2°C and this state is sustained over a predetermined length of time (Tup) (step 56). The length of time over which the evaporating temperature is sustained at Tc1 is set in advance to the length of time that elapses before an odor starts to develop as the fin surfaces start to dry after the evaporating temperature is raised.

Then, the evaporating temperature is set to Tc2 which is lower than Tc0 and this state is sustained over a predetermined length of time (Tlow) (step 58). The length of time over which the evaporating temperature is sustained at Tc2 should be set to an optimal value that assures both power saving for the compressor 17 and formation of condensed water at the surface of the evaporator 10, i.e., a value at which the evaporating temperature is sustained at Tc2 for neither too long nor too short a period of time.

After the evaporating temperature is sustained at Tc2 over the predetermined length of time (Tlow), the operation returns to step 56 to raise the evaporating temperature to the level ( Tc1) higher than Tc0 by 1 to 2°, and subsequently, the operations in steps 56 and 58 are repeated to alter the evaporating temperature as shown in FIG. 3.

Thus, by adopting the structure described above in which the evaporating temperature is switched to the upper level or the lower level relative to the critical evaporating temperature (Tc0) constituting the threshold of the odor generation, the formation of condensed water is promoted while the evaporating temperature is set lower than the critical evaporating temperature (Tc0) to prevent the fin surfaces from drying up and, as a result, odor generation is avoided or the extent of odor generation is reduced. In addition, while the evaporating temperature is set higher than the critical evaporating temperature (Tc0), the compressor 17 can be operated in a power-saving mode since the compression ratio of the compressor 17 is lowered.

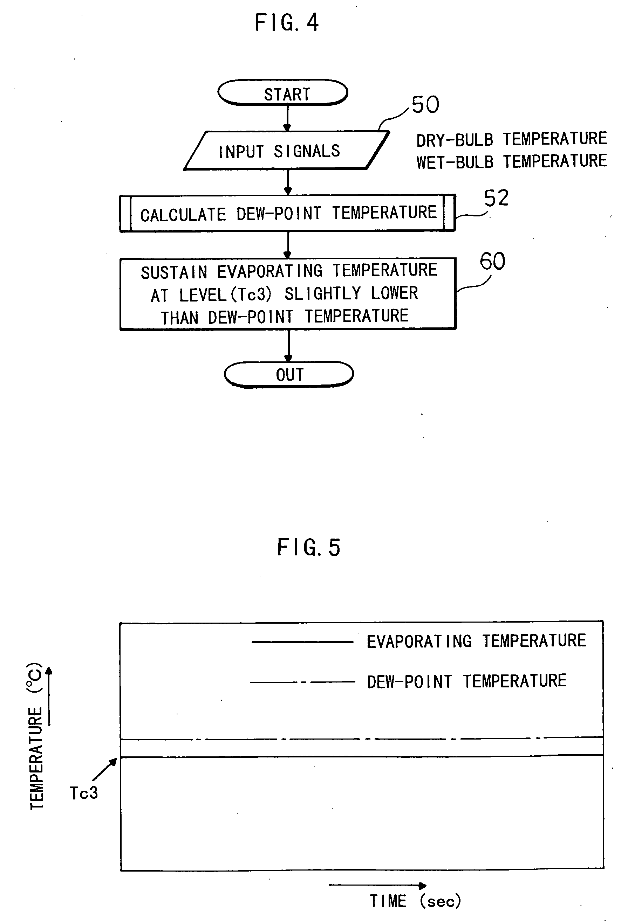

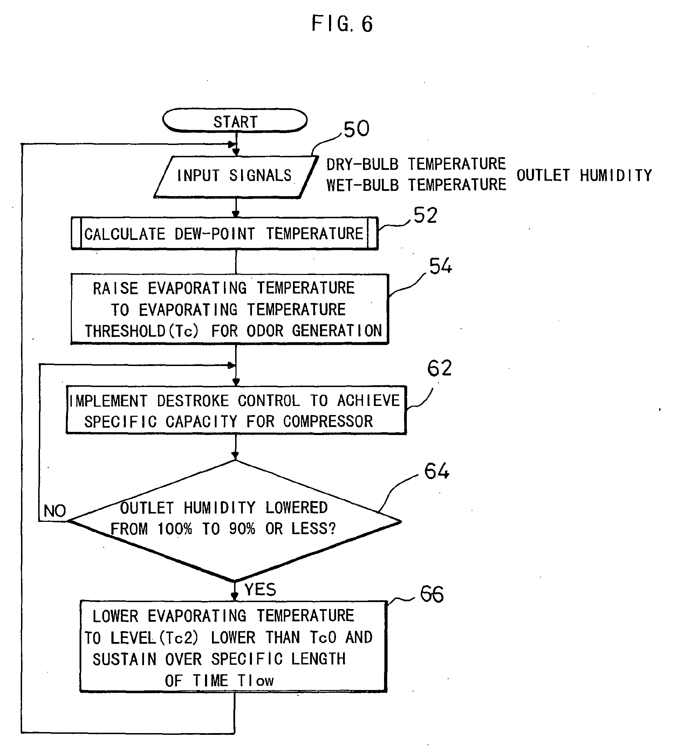

Through the control described above, the operation during which the evaporating temperature is sustained at the level (Tc1) higher than the critical evaporating temperature (Tc0) over the predetermined length of time (Tup) and the operation during which the evaporating temperature is sustained at the level (Tc2) lower than the critical evaporating temperature (Tc0) over the predetermined length of time (Tlow) are alternately performed so as to reduce the compression ratio of the compressor 17 intermittently while forming condensed water at the surface of the evaporator 10. Alternatively, an operation for sustaining the evaporating temperature at a level slightly lower than the dew-point temperature as shown in FIG. 5 (step 60) may be executed after dew-point temperature is calculated in step 52 as shown in FIG. 4. It is to be noted that since the operations performed in the other steps are identical to those in the example explained earlier, the same step numbers are assigned to identical steps to preclude the necessity for a repeated explanation thereof.

Through the alternative control described above, the evaporating temperature is never allowed to be much lower than the dew-point temperature and thus, the compressor 17 can be operated continuously in the power-saving mode. In addition, since the surface of the evaporator 10 can be kept in a moist state, the generation of odor can be prevented as well.

It is to be noted that while the dew-point temperature is calculated based upon the wet-bulb temperature detected with the wet-bulb thermal sensor 26 in the structure described above, the dew-point temperature may instead be calculated based upon an estimated wet-bulb temperature. For instance, after the clutch of the compressor 17 is disengaged or the output capacity of the compressor 17 is set to the lowest level, the fin temperature first rises and then is sustained at a constant level until condensed water at the fin surfaces starts to evaporate and the fin surfaces become dry. Accordingly, the fin temperature may be regarded as the wet-bulb temperature so as to calculate the dew-point temperature based upon the fin temperature and the intake-side air temperature at the evaporator 10.

While the evaporating temperature is sustained at the upper and lower levels over the predetermined specific lengths of time (Tup and Tlow) in the control through which the evaporating temperature is switched to the upper or lower level relative to the critical evaporating temperature (Tc0) as described above, the operation during which the evaporating temperature is set at Tc1 higher than Tc0 may instead be continuously performed until the odor intensifies. Namely, when the value indicated by the factor correlated to the odor generation exceeds a specific threshold, the output capacity of the variable-capacity compressor may be increased to sustain the evaporating temperature at the lower level over the predetermined length of time.

More specifically, an outlet humidity sensor 28 may be provided on the outlet side of the evaporator 10 so as to implement, for instance, the control shown in FIG. 6 by using a signal provided by the outlet humidity sensor 28. Namely, following the processing executed in step 54, control for destroking the compressor 17 to achieve a specific capacity is implemented (step 62). In response to the destroke control, the condensed water at the evaporator surface starts to evaporate, thereby raising the outlet humidity at the evaporator 10 to 100%. After a while, however, the fins at the evaporator 10 start to dry and the outlet humidity gradually becomes lower. As explained earlier, as the fins become drier, the odor gradually intensifies and, accordingly, a decision is made in step 64 as to whether or not the outlet humidity at the evaporator 10 has become lowered from 100% to 90% or less. When the outlet humidity at the evaporator 10 is 90% or less, the evaporating temperature is lowered to Tc2, and the development of an intense odor is suppressed by sustaining this state over the predetermined length of time (Tlow). It is to be noted that since the operations performed in the other steps are identical to those in the example explained earlier, the same step numbers are assigned to identical steps to preclude the necessity for a repeated explanation thereof.

As a result, by adopting this structure in which the destroke control is implemented on the compressor 17 up to a point very close to the point of intense odor generation and the capacity of the compressor 17 is then controlled so as to lower the evaporating temperature, the compressor 17 can be operated in the power-saving mode until immediately before the point at which an intense odor would develop to achieve power-saving in the air-conditioning system and at the same time, the actual generation of intense odor can be minimized.

While the outlet humidity at the evaporator 10 is detected with the outlet humidity sensor 28 and the evaporating temperature is controlled based upon a decision as to whether or not the humidity has become lower than a specific level, similar control may be achieved by providing a sensor that detects the extent to which the fin surfaces at the evaporator 10 have become dry through a specific method and by making a decision as to whether or not the sensor output indicates a value beyond a predetermined threshold.

For instance, an electric resistance sensor 29 that detects an electric resistance may be mounted at a fin surface instead of providing the outlet humidity sensor 28, and since the electric resistance increases as the fin surface becomes dry, the evaporating temperature may be lowered based upon a decision that the electric resistance at the fin surface has risen to a level equal to or higher than a predetermined value following the destroke control implemented on the compressor 17. Alternatively, instead of providing the outlet humidity sensor 28, an electrostatic capacity sensor 30 that detects an electrostatic capacity may be mounted at a fin surface, and since the electrostatic capacity increases as the fin surface becomes dry, the evaporating temperature may be lowered based upon a decision that the electrostatic capacity at the fin surface has risen to a level equal to or higher than a predetermined value following the destroke control implemented on the compressor 17.

As a further alternative, a thermal sensor 31 that detects a fin temperature at the evaporator 10 may be inserted from the rear end of the evaporator 10 so as to reach the center of the evaporator 10, and the evaporating temperature may be lowered based upon a decision that the fin temperature at the center has reached a level equal to or higher than a predetermined value. In this structure, the output capacity of the compressor is increased and thus the evaporating temperature is lowered before the air outlet side of the evaporator 10 starts to dry. As a result, the development of an intense odor can be minimized.

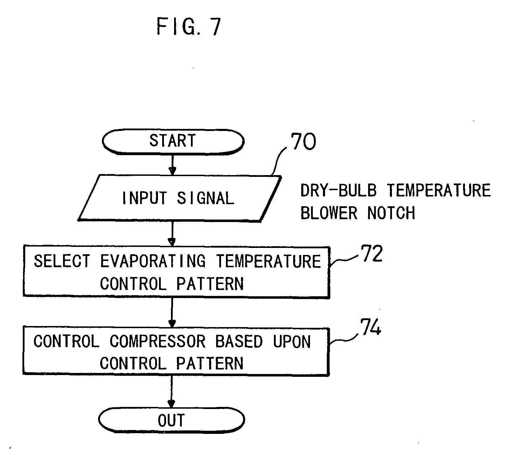

While the evaporating temperature is controlled in reference to the dew-point temperature in the explanation given above, the evaporating temperature may instead be controlled based upon typical characteristics not related to the humidity to achieve power saving for the compressor 17 and reduce the extent of odor generation. For instance, as shown in FIG. 7, a signal indicating the dry-bulb temperature detected with the dry-bulb thermal sensor 25 and a signal indicating the blower notch at a setting device used to set the air quantity for the air blower may be input (step 70), an evaporating temperature control pattern may be selected from control patterns stored in memory in advance based upon the information thus input (step 72), and the output capacity of the compressor 17 may be controlled in conformance to the selected control pattern (step 74).

While such a structure does not enable stringent control on the evaporating temperature, the evaporating temperature is still controlled so as to reduce the extent of odor generation in conformance to the selected pattern, while eliminating the need to employ numerous sensors. As a result, structural simplification is achieved.

As described above, according to the present invention as disclosed in claim 1 or 2, the dew-point temperature is calculated based upon a factor correlated to generation of odor from the evaporator and the in evaporating temperature is controlled by adjusting the output capacity of the variable-capacity compressor relative to the dew-point temperature thus calculated. As a result, in an air-conditioning system that utilizes such a variable-capacity compressor, the development of an odor generated from the evaporator disposed inside the air-conditioning case can be avoided or the extent of odor generation can be reduced and, at the same time, the power consumption in the variable-capacity compressor can be reduced.

In particular, by adopting the structure disclosed in claim 1, in which the dew-point temperature is calculated and the evaporating temperature is alternately switched relative to the critical evaporating temperature constituting a threshold of odor generation which is determined in relation to the dew-point temperature to a level higher than the critical evaporating temperature or a level lower than the critical evaporating temperature, generation of odor can be suppressed by keeping the surface of the evaporator moistened with condensed water and, at the same time, power-savings can be achieved by intermittently reducing the compression ratio at the compressor.

In addition, by adopting the structure disclosed in claim 2 in which the dew-point temperature is calculated and the evaporating temperature is sustained at a level slightly lower than the dew-point temperature, odor generation can be avoided or reduced by keeping the surface of the evaporator moistened with condensed water and since an excessive consumption of power in the compressor is disallowed, power setting is achieved.

By adopting the structure disclosed in any of claims 3 through 7, the output capacity of the variable-capacity compressor is increased to lower the in evaporating temperature over a predetermined length of time as the value indicated by the factor correlated to generation of odor from the evaporator exceeds a specific threshold, and thus, the extent of odor generation can be reduced while minimizing power consumption in the compressor.

In particular, by adopting the structure disclosed in claim 4, in which the means for correlational factor acquisition is constituted of a humidity detection sensor that detects the humidity of the air having passed through the evaporator so as to enable the means for evaporating temperature control to lower the evaporating temperature over the predetermined length of time by increasing the output capacity of the variable-capacity compressor as the humidity level detected with the humidity detection sensor becomes lower than a specific threshold after the operation for reducing the output capacity of the variable-capacity compressor starts, the extent to which the evaporator surface has become dry due to evaporation of condensed water can be sensed with the humidity sensor and thus, the output capacity of the compressor can be kept down as long as possible before the odor from the evaporator starts to intensify. As a result, the odor generation can be prevented or reduced while minimizing power consumption in the compressor.

In addition, by adopting the structure disclosed in claim 5, in which the means for correlational factor acquisition is constituted of the electric resistance sensor that is mounted at a fin surface of the evaporator to detect an electric resistance and the resistance detected with the electric resistance sensor so as to enable the means for evaporating temperature control to lower the evaporating temperature over the predetermined length of time by increasing the output capacity of the variable-capacity compressor as the resistance detected with the electric resistance detection sensor exceeds a specific threshold after the operation for reducing the output capacity of the variable-capacity compressor starts, the extent to which the evaporator surface has become dry due to evaporation of the condensed water can be sensed with the electric resistance sensor and thus, the output capacity of the compressor can be kept down as long as possible before the odor from evaporator starts to intensify. As a result, odor generation can be prevented or reduced while minimizing power consumption in the compressor.

Furthermore, by adopting the structure disclosed in claim 6, in which the means for correlational factor acquisition is constituted of the electrostatic capacity sensor that is mounted at a fin surface of the evaporator to detect an electrostatic capacity so as to enable the means for evaporating temperature control to lower the evaporating temperature over the predetermined length of time by increasing the output capacity of the variable-capacity compressor as the electrostatic capacity detected with the electrostatic capacity sensor exceeds a specific threshold after the operation for reducing the output capacity of the variable-capacity compressor starts, the extent to which the evaporator surface has become dry due to the evaporation of the condensed water can be sensed with the electrostatic capacity sensor and thus, the output capacity of the compressor can be kept down as long as possible before the odor from evaporator starts to intensify. As a result, the odor generation can be prevented or reduced while minimizing the power consumption in the compressor.

By adopting the structure disclosed in claim 7 in which the means for correlational factor application is constituted of a thermal sensor that is mounted at the surface at the center of the fins of the evaporator to detect the fin temperature so as to enable the means for evaporating temperature control to lower the evaporating temperature over the predetermined length of time by increasing the output capacity of the variable-capacity compressor as the fin temperature exceeds a specific threshold, it is possible to detect that the central portion of the evaporator has started to dry and thus to keep down the output capacity of the compressor until immediately before the outlet side starts to dry and a strong odor starts to develop. As a result, the odor generation can be prevented or reduced while minimizing low power consumption in the compressor.

Unlike the control described above, the control disclosed in claim 8 does not stringently suppress generation of odor. However, approximate control for reducing the odor generation while achieving power saving in the compressor is enabled.

Although the invention has been described in its preferred form with a certain degree of particularity, it is understood that the present disclosure of the preferred form may be changed in the details of construction and the combination and arrangement of parts without departing from the spirit and scope of the invention as hereinafter claimed.

## Claims

1. A power-saving control device for an air-conditioning system comprising:
an air-conditioning case having an air flow passage formed therein;
a variable-capacity compressor that allows an output capacity with which a compressed coolant is output to be varied; and
an evaporator that is disposed inside said air flow passage at said air-conditioning case and executes heat exchange between the coolant output from said variable-capacity compressor and supplied thereto via a pressure-reducing device and air flowing through said air flow passage; with said power-saving control device adopting a structure that enables power-saving control through control of the output capacity of said variable-capacity compressor;
**characterized in that** said power-saving control device further includes:
a means for correlational factor acquisition that obtains a factor correlated to generation of odor from said evaporator;
a means for dew-point temperature calculation that obtains through an arithmetic calculation a dew-point temperature based upon the factor obtained by said means for correlational factor acquisition; and
a means for control that determines a critical evaporating temperature to constitute a threshold value of odor generation based upon the dew-point temperature calculated by said means for dew-point temperature calculation and alternately switches to an operation during which the evaporating temperature is sustained at a level higher than the critical evaporating temperature over a predetermined length of time and an operation during which the evaporating temperature is sustained at a level lower than the critical evaporating temperature over a predetermined length of time through the control of the output capacity of said variable-capacity compressor.

2. A power-saving control device for an air-conditioning system comprising:
an air-conditioning case having an air flow passage formed therein;
a variable-capacity compressor that allows an output capacity with which a compressed coolant is output to be varied; and
an evaporator that is disposed inside said air flow passage at said air-conditioning case and executes heat exchange between the coolant output from said variable-capacity compressor and supplied thereto via a pressure-reducing device and air flowing through said air flow passage; with said power-saving control device adopting a structure that enables power-saving control through control of the output capacity of said variable-capacity compressor;
**characterized in that** said power-saving control device further includes:
a means for correlational factor acquisition that obtains a factor correlated to generation of odor from said evaporator;
a means for dew-point temperature calculation that obtains through an arithmetic calculation a dew-point temperature based upon the factor obtained by said means for correlational factor acquisition; and
a means for control that enables a continuous execution of an operation during which the evaporating temperature is sustained at a level close to the dew-point temperature calculated by said means for dew-point temperature calculation and lower than the dew-point temperature through the control of the output capacity of said variable-capacity compressor.

3. A power-saving control device for an air-conditioning system comprising:
an air-conditioning case having an air flow passage formed therein;
a variable-capacity compressor that allows an output capacity with which a compressed coolant is output to be varied; and
an evaporator that is disposed inside said air flow passage at said air-conditioning case and executes heat exchange between the coolant output from said variable-capacity compressor and supplied thereto via a pressure-reducing device and air flowing through said air flow passage with said power-saving control device adopting a structure that enables power-saving control through control of the output capacity of said variable-capacity compressor;
**characterized in that** said power-saving control device further includes:
a means for correlational factor acquisition that obtains a factor correlated to generation of odor from said evaporator;
a means for evaporating temperature control that sets an evaporating temperature to a lower level over a predetermined length of time by increasing the output capacity of said variable-capacity compressor as soon as the factor obtained by said means for correlational factor acquisition exceeds a predetermined threshold value after said variable-capacity compressor starts an operation for reducing the output capacity.

4. A power-saving control device for an air-conditioning system according to claim 3;
**characterized in that** said means for correlational factor acquisition is constituted of a humidity detection sensor that detects the humidity of the air having passed through said evaporator; and
that said means for evaporating temperature control lowers the evaporating temperature over the predetermined length of time by increasing the output capacity of said variable-capacity compressor as the humidity detected with said humidity detection sensor becomes lower than a predetermined threshold value after the operation for reducing the output capacity of said variable-capacity compressor starts.

5. A power-saving control device for an air-conditioning system according to claim 3;
**characterized in that** said means for correlational factor acquisition is constituted of an electric resistance sensor that is inserted at a fin surface at said evaporator to detect an electric resistance at the fin surface; and
that said means for evaporating temperature control lowers the evaporating temperature over a predetermined length of time by increasing the output capacity of said variable-capacity compressor as the resistance detected with said electric resistance sensor rises beyond a predetermined threshold value after the operation for reducing the output capacity of said variable-capacity compressor starts.

6. A power-saving control device for an air-conditioning system according to claim 3;
**characterized in that** said means for correlational factor acquisition is constituted of an electrostatic capacity sensor that is inserted at a fin surface at said evaporator to detect an electrostatic capacity at the fin surface; and
that said means for evaporating temperature control lowers the evaporating temperature over the predetermined length of time by increasing the output capacity of said variable-capacity compressor as the electrostatic capacity detected with said electrostatic capacity sensor increases beyond a predetermined threshold value after the operation for reducing the output capacity of said variable-capacity compressor starts.

7. A power-saving control device for an air-conditioning system according to claim 3;
**characterized in that** said means for correlational factor acquisition is constituted of a thermal sensor that is inserted inside an air passage at said evaporator to detect a fin temperature inside said air passage at said evaporator; and
that said means for evaporating temperature control lowers the evaporating temperature over the predetermined length of time by increasing the output capacity of said variable-capacity compressor as the fin temperature rises beyond a predetermined threshold value.

8. A power-saving control device for an air-conditioning system comprising:
an air-conditioning case having an air flow passage formed therein;
a variable-capacity compressor that allows an output capacity with which a compressed coolant is output to be varied; and
an evaporator that is disposed inside said air flow passage at said air-conditioning case and executes heat exchange between the coolant output from said variable-capacity compressor and supplied thereto via a pressure-reducing device and air flowing through said air flow passage with said power-saving control device adopting a structure that enables power-saving control through control of the output capacity of said variable-capacity compressor;
**characterized in that** said power-saving control device further includes:
a means for correlational factor acquisition that obtains a factor correlated to generation of odor from said evaporator; and
a means for control that determines typical characteristics unrelated to humidity based upon the factor obtained by said means for correlational factor acquisition and controls the output capacity of said variable-capacity compressor based upon the typical characteristics.
